(19) Europäisches Patentamt
European Patent Office
Office européen des brevets

(11) **EP 1 194 686 B1**

(12) **EUROPÄISCHE PATENTSCHRIFT**

(45) Veröffentlichungstag und Bekanntmachung des Hinweises auf die Patenterteilung:
**30.06.2004  Patentblatt 2004/27**

(21) Anmeldenummer: **00943531.4**

(22) Anmeldetag: **27.04.2000**

(51) Int Cl.$^7$: **F02D 41/14**, B60K 41/14

(86) Internationale Anmeldenummer:
**PCT/DE2000/001320**

(87) Internationale Veröffentlichungsnummer:
**WO 2000/079111 (28.12.2000 Gazette 2000/52)**

(54) **VERFAHREN UND VORRICHTUNG ZUR STEUERUNG DER ANTRIEBSEINHEIT EINES FAHRZEUGS**

METHOD AND DEVICE FOR CONTROLLING THE DRIVE UNIT OF A VEHICLE

PROCEDE ET DISPOSITIF DE COMMANDE DE L'UNITE DE TRANSMISSION D'UN VEHICULE

(84) Benannte Vertragsstaaten:
**DE FR IT NL SE**

(30) Priorität: **22.06.1999  DE 19928516**

(43) Veröffentlichungstag der Anmeldung:
**10.04.2002  Patentblatt 2002/15**

(73) Patentinhaber: **ROBERT BOSCH GMBH**
**70442 Stuttgart (DE)**

(72) Erfinder: **LUH, Joachim**
**D-74321 Bietigheim-Bissingen (DE)**

(56) Entgegenhaltungen:
**EP-A- 0 655 554          DE-A- 19 523 898**
**DE-A- 19 828 603          US-A- 5 209 203**

**Beschreibung**

Stand der Technik

Die Erfindung betrifft ein Verfahren und eine Vorrichtung zur Steuerung der Antriebseinheit eines Fahrzeugs.

Aus der DE-A 195 23 898 ist ein derartiges Verfahren bzw. eine derartige Vorrichtung bekannt. Dort wird zur Verringerung von Schwingungen im Antriebsstrang des Fahrzeugs das Drehmoment der Antriebseinheit, beispielsweise deren Zündwinkel, nach Maßgabe eines Vergleichs zwischen der Drehzahl der Antriebseinheit und einer anhand der Drehmomentenzustände im Antriebstrang des Fahrzeugs gewonnenen Modell- oder Solldrehzahl beeinflußt. Letztere wird aus einem den Fahrerwunsch repräsentierenden Moment durch Integrieren gebildet. Durch Vergleich der Modell- oder Solldrehzahl mit der Drehzahl der Antriebseinheit werden Schwingungen des Fahrzeugantriebs erkannt und isoliert, um dann durch phasenrichtige Momenteneingriffe gedämpft zu werden. Der Einsatz dieser sogenannten Antiruckel-Funktion führt zu unerwarteten Fahrzeugreaktionen, wenn beim Gasgeben ein Getriebe zurückgeschaltet wird. Die damit verbundene Erhöhung der Motordrehzahl wird als Triebstrangschwingung interpretiert und führt zur Rücknahme des Motordrehmoments. Das wird vom Fahrer als unangenehm empfunden. Diese Problematik tritt vor allem bei stufenlosen Getrieben (CVT-Getrieben) oder bei Getrieben mit einer stufenloser Verstellcharakteristik auf, kann aber auch bei anderen Getriebetypen von Bedeutung sein.

Es ist Aufgabe der Erfindung, Maßnahmen anzugeben, die eine Antiruckel-Funktion auch bei Rückschaltvorgängen eines Getriebes optimieren.

Dies wird durch die kennzeichnenden Merkmale der unabhängigen Patentansprüche erreicht.

Vorteile der Erfindung

Durch die nachfolgend beschriebene Bildung der Soll- bzw. Modelldrehzahl wird wirksam vermieden, daß es infolge der Antiruckel-Funktion bei Gasgeben unter Rückschalten eines Getriebes zur Rücknahme des Motordrehmomentes kommt. Das Beschleunigungsverhalten des Fahrzeugs wird verbessert.

Besonders vorteilhaft ist, daß eine Beeinträchtigung der Antiruckel-Funktion nicht stattfindet, so daß sie dort ihre gewohnt vorteilhafte Wirkung zeigt und Triebstrangschwingungen wirksam unterdrückt.

Besonders vorteilhaft ist, daß die Soll- bzw. Modelldrehzahl auf der Basis von Betriebsgrößen gebildet wird, welche ohnehin zur Verfügung stehen. Damit ergibt sich eine Reduzierung des Aufwandes bei verbesserter Funktion.

Besonders vorteilhaft ist die Anwendung der nachfolgend beschriebenen Vorgehensweise in Verbindung mit stufenlosen Automatikgetrieben (CVT-Getrieben). In diesem Anwendungsfall wird eine besonders vorteilhafte Wirkung erzielt und das Fahrverhalten des Fahrzeugs bei Gasgeben erheblich verbessert.

Weitere Vorteile ergeben sich aus der nachfolgenden Beschreibung von Ausführungsbeispielen bzw. aus den abhängigen Patentansprüchen.

Zeichnung

Die Erfindung wird nachstehend anhand der in der Zeichnung dargestellten Ausführungsformen näher erläutert. Figur 1 zeigt dabei die Steuerung einer Antriebseinheit, welche mit einem stufenlosen Automatikgetriebe ausgestattet ist. Dies stellt eine bevorzugte Ausführung der Erfindung dar, die jedoch auch in Verbindung mit anderen Getriebetypen anwendbar ist. In Figur 2 ist ein Ablaufdiagramm dargestellt, welches ein Programm repräsentiert, daß im Mikrocomputer der Getriebe- und/oder Motorsteuereinheit abläuft und welches den eingesetzten Antiruckel-Regler darstellt. In Figur 3 ist ein Ablaufdiagramm skizziert, welches die Bildung der Soll- bzw. Modelldrehzahl zeigt, die dem Antiruckel-Regler zugeführt wird.

Beschreibung von Ausführungsbeispielen

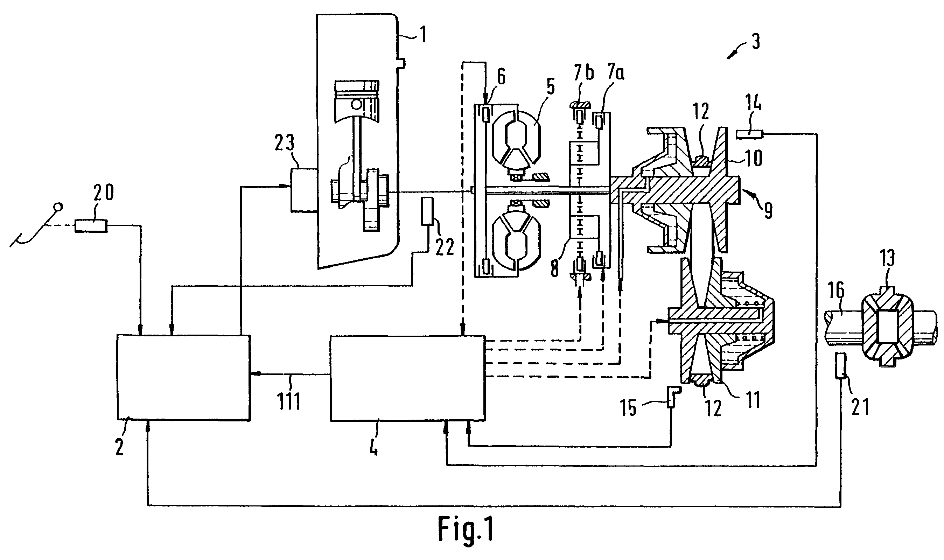

In Figur 1 ist ein bevorzugtes Ausführungsbeispiel dargestellt, welches die Steuerung einer Antriebseinheit eines Fahrzeugs, welche mit einem stufenlosen Automatikgetriebe (CVT-Getriebe) ausgestattet ist, zeigt. Es ist ein Verbrennungsmotor 1 mit einer elektronischen Motorsteuereinheit 2 dargestellt. Das stufenlose Getriebe 3 besitzt eine elektronische Getriebesteuereinheit 4. Die Motorsteuereinheit und die Getriebesteuereinheit werden dabei in einem Ausführungsbeispiel in einem kombinierten Steuergerät untergebracht. Das stufenlose Getriebe 3 umfaßt einen Drehmomentenwandler 5, mit Wandlerüberbrückungskupplung 6 und Kupplungen 7a, 7b für Vorwärts- und Rückwärtsfahrtumschaltung mit Planetensatz 8, die zwischen dem Motor 1 und dem Variator 9 angeordnet sind. Der Variator 9 besteht aus einem antriebsseitigen (primären) Kegelscheibensatz 10 und einem abtriebsseitigen (sekundären) Kegelscheibensatz 11, wobei mit Hilfe einer Kette oder eines Schubgliederbandes 12 die Kraft von dem Antriebs- auf den Abtriebsscheibensatz übertragen wird. Jeder Kegelscheibensatz besteht aus einer axial feststehenden und einer axial beweglichen Scheibe. Durch gleichzeitige Variation der axial beweglichen Scheiben auf dem Antriebs- und dem Abtriebsscheibensatz ändert sich die Übersetzung des Variators 9 von einer hohen Anfahrübersetzung (low) bis zu einer niedrigen Übersetzung (overdrive). Der Abtriebsscheibensatz 11 ist über ein Ausgleichsgetriebe 13 mit den Antriebswellen 16 der Räder verbunden. Die elektronische Getriebesteuereinheit 4 hat wenigstens die Aufgabe, die Übersetzung des Getriebes einzustellen und zu erfassen. Dazu können beispielsweise an der Antriebsscheibe 10 und der Abtriebsscheibe 11 Drehzahlsensoren 14 und 15 vorhanden sein. Üblicherweise stellt die elektronische Getriebesteuerung 4 die Übersetzung des Getriebes 3 ein, steuert die Kupplungen 7a, 7b und die Wandlerüberbrückungskupplung 6 an. Neben diesem beispielhaft vorgestellten stufenlosen Umschlingungsgetriebe können auch andere stufenlos in ihrer Übersetzung verstellbare Getriebe, z.B. Reibradgetriebe, Torroid-Getriebe, etc. eingesetzt werden.

Die elektronische Motorsteuerung 2 ist mit Sensoren 20 zur Erfassung des Fahrerwunsches verbunden. Ein derartiger Sensor ist im einfachsten Fall ein Fahrpedalstellungssensor. Ferner sind Sensoren 21 zur Erfassung der Fahrzeuggeschwindigkeit und Sensoren 22 zur Ermittlung der Motordrehzahl vorgesehen. Die Motorsteuerung 2 wirkt auf wenigstens ein Stellglied 23 zur Einstellung des Motormomentes nach Maßgabe des auf der Basis des Fahrerwunsch vorgegebenen Sollmoments. Dabei ist es im Zusammenhang mit der nachfolgend beschriebenen Vorgehensweise unerheblich, wie dieses wenigstens eine Stellglied angesteuert wird, mit deren Hilfe das Motorsollmoment in ein Motormoment umgesetzt wird.

Neben dem Einsatz von Verbrennungsmotoren wird die nachfolgend beschriebene Vorgehensweise auch in Verbindung mit anderen Antriebskonzepten, z.B. Elektromotoren, eingesetzt.

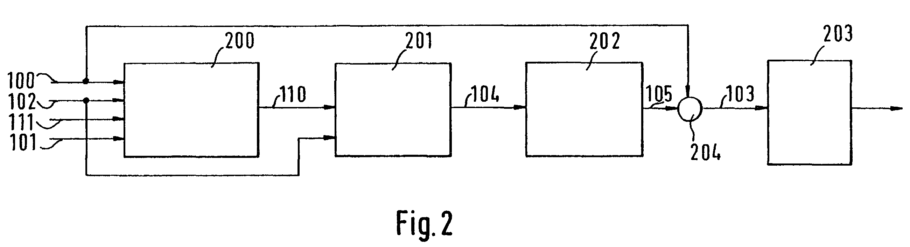

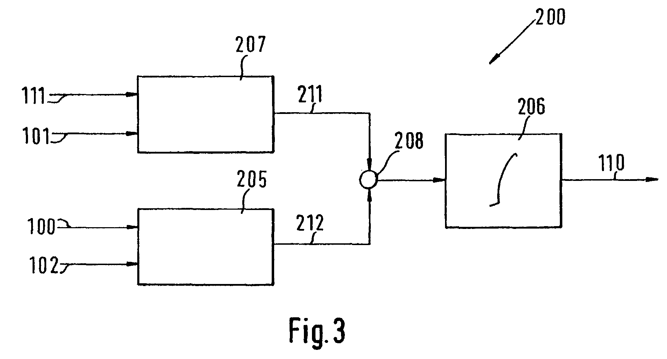

In Figur 2 ist ein Ablaufdiagramm dargestellt, welches ein einen Antiruckel-Regler realisierendes Programm skizziert. Dieses Programm läuft in einem Mikrocomputer ab, welcher Teil der Motorsteuereinheit 2 oder der Getriebesteuereinheit 4 ist. Der Mikrocomputer erfaßt aus den ggf. aufbereiteten Sensorsignalen bzw. aus den Sensorsignalen abgeleitet das Fahrerwunschmoment 100, die Motordrehzahl 102, die Getriebeübersetzung 111 und die Fahrzeuggeschwindigkeit 101. Dabei wird das Fahrerwunschmoment auf der Basis des Signals des Sensors 20, welcher die Stellung des Fahrpedal repräsentiert, unter Berücksichtigung wenigstens der Motordrehzahl gebildet. Die Fahrzeuggeschwindigkeit wird in einem Ausführungsbeispiel mittels eines Sensors gemessen, in einem anderen Ausführungsbeispiel auf der Basis wenigstens eines ausgewählten Radgeschwindigkeitssignals abgeschätzt. Die Getriebeübersetzung wird wie nachfolgend beschrieben, ermittelt. Die genannten Signale werden einem Beobachter 200 zugeführt, dessen Aufbau und Funktionsweise anhand des Ablaufdiagramms der Figur 3 skizziert ist. Ausgang des Beobachters 200 ist die Soll- bzw. Modelldrehzahl 110. Diese wird einem Schwingungserkenner 201 zusammen mit der erfaßten Motordrehzahl 102 zugeführt. Dieser bildet entsprechend der Vorgehensweise aus dem eingangs genannten Stand der Technik die Abweichung zwischen den beiden Drehzahlgrößen und isoliert die mögliche Drehzahlschwingung. Die auf diese Weise isolierte Drehzahlschwingung 104 wird dann im Regler 202 in einen Drehmomentenänderungswert 105 umgerechnet, wie es ebenfalls im eingangs genannten Stand der Technik dargestellt ist. Dieser Drehmomentenänderungswert wird dann dem Fahrerwunschmoment 100 aufgeschaltet (vgl. Sollmomentenbilder 204), welches von dem Änderungswert derart beeinflußt wird, daß die Umsetzung des so gebildeten Sollmoments zu einer Reduzierung der Triebstrangschwingung führt. Das auf diese Weise ermittelte Sollmoment 103 wird dann im Block 203 in die wenigstens eine Stellgröße umgesetzt, welche derart bemessen sind, daß das Sollmoment durch Betätigen des wenigstens einen Stellglieds 23 im wesentlichen eingestellt wird.

Wesentlich zur Verbesserung der Antiruckel-Funktion ist die Bildung der Soll- bzw. Modelldrehzahl im Beobachter 200. In Figur 3 ist ein Ablaufdiagramm eines bevorzugten Ausführungsbeispieles dieses Beobachters dargestellt. Wird der Antiruckel-Regler in der Motorsteuerungseinheit realisiert und ist die Getriebesteuerung in einer anderen Steuereinheit untergebracht, so wird von der Getriebesteuereinheit 4 die Istübersetzung 111 des Getriebes und/oder die Sollübersetzung des Getriebes an die Motorsteuereinheit 2 übermittelt. In der Getriebesteuereinheit bzw. als Alternative in der Motorsteuereinheit wird die Istübersetzung 111 aus den Signalen der Drehzahlsensoren 14, 15 wie folgt ermittelt:

$$JI = K * NPM / NSE$$

JI: Istübersetzung
NPM: Getriebeabtriebsdrehzahl
NSE: Motordrehzahl
K: Faktor, der weitere Getriebestufen berücksichtigt

Der Faktor K ist insbesondere bei Vorhandensein mehrerer Kupplungen im Getriebe auch abhängig von der jeweils zugeschalteten Kupplung.

Der Beobachter 200 enthält einen Motordrehzahlgradientenbilder 207, welche den Motordrehzahlgradienten 211 berechnet, der durch eine Übersetzungsverstellung des Getriebes hervorgerufen wird. Diesem werden die z.B. wie oben bestimmte Getriebeübersetzung 111 und die Fahrzeuggeschwindigkeit 101 zugeführt. Auf der Basis dieser Größen wird der Motordrehzahlgradient berechnet, indem von einer konstanten Fahrgeschwindigkeit vor und nach der Übersetzungsverstellung ausgegangen wird und die zeitliche Änderung der Motordrehzahl auf der Basis der zeitlichen Änderung der Übersetzung des Getriebes bei konstanter Fahrzeuggeschwindigkeit und damit Abtriebsdrehzahl abgeschätzt wird. Der Motordrehzahlgradient 211 repräsentiert also den Gradienten der Motordrehzahl, der durch die Verstellung des Getriebes entsteht. Im Motordrehzahlgradientenbilder 205 wird z.B. auf der Basis des Fahrerwunschmomentes 100 und der Motordrehzahl 102 ein weiterer Motordrehzahlgradient 212 berechnet, welcher den Motordrehzahlgradienten repräsentiert, der aus dem Wunsch des Fahrers nach Beschleunigung des Fahrzeugs entsteht. Dabei wird in anderen Ausführungen anstelle des Fahrerwunschmoments 100 eine andere, das Fahrerwunschmoment repräsentierende Größe herangezogen, wie z.B. das im Stand der Technik verwendete Beschleunigungsmoment, das Istdrehmoment, die Fahrpedalstellung, etc. Zur Bestimmung des Motordrehzahlgradienten 212 wird davon ausgegangen, daß das Fahrerwunschmoment unter den aktuellen Bedingungen ohne Berücksichtigung der Verstellung der Getriebeübersetzung einer bestimmten Beschleunigung des Fahrzeugs entspricht (bei Erfassung des Beschleunigungsmoments bereits berücksichtigt). Aus der zu erwartenden Geschwindigkeitszunahme bei unveränderter Übersetzung wird dann auf eine Drehzahländerung geschlossen.

Die beiden Motordrehzahlgradienten werden verknüpft, vorzugsweise addiert (Verknüpfungsstelle 208), und das Resultat (Summe) im Integrator 206 integriert. Ergebnis ist die Soll- bzw. Modelldrehzahl 110 für den Antiruckel-Regler.

Die zur Berechnung der Motordrehzahlgradienten notwendigen Parameter in der Berechnungsblöcken 205, 206 und 207 werden aus Kennlinien als Funktion der Getriebeübersetzung 111 ausgelesen.

Die dargestellte Vorgehensweise wird auch bei Getrieben eingesetzt, die eine stufenlose Verstellcharakteristik aufweisen.

## Patentansprüche

1. Verfahren zur Steuerung der Antriebseinheit eines Fahrzeugs, wobei das Drehmoment der Antriebseinheit im Sinne einer Verringerung von Schwingungen im Antriebsstrang im Fahrzeug beeinflußt wird, wobei die Beeinflussung des Drehmoments aus einem Vergleich der Drehzahl der Antriebseinheit mit einer vorgegebenen Solldrehzahl abgeleitet wird, **dadurch gekennzeichnet, daß** die Solldrehzahl abhängig von den durch die Fahrervorgabe und/oder durch die Übersetzungsverstellung des Getriebes hervorgerufenen Motordrehzahlgradienten bestimmt wird.

2. Verfahren nach Anspruch 1, **dadurch gekennzeichnet, daß** das Getriebe ein Getriebe mit stufenloser Verstellcharakteristik, insbesondere ein CVT-Getriebe ist.

3. Verfahren nach einem der vorhergehenden Ansprüche, **dadurch gekennzeichnet, daß** der durch die Übersetzungsverstellung des Getriebes hervorgerufene Motordrehzahlgradient auf der Basis der Getriebeübersetzung und der Fahrzeuggeschwindigkeit bestimmt wird.

4. Verfahren nach einem der vorhergehenden Ansprüche, **dadurch gekennzeichnet, daß** der dem Fahrerwunsch entsprechende Motordrehzahlgradient aus Fahrervorgabe und Motordrehzahl ermittelt wird.

5. Verfahren nach einem der vorhergehenden Ansprüche, **dadurch gekennzeichnet, daß** die ermittelten Gradienten verknüpft und das Verknüpfungsergebnis zur Sollmotordrehzahl integriert werden.

6. Vorrichtung zur Steuerung der Antriebseinheit eines Fahrzeugs, mit einer Steuereinheit, die ein Drehmoment der Antriebseinheit im Sinne einer Verringerung von Schwingungen im Antriebsstrang des Fahrzeugs beeinflußt, die eine Reglereinheit umfaßt, welche das Drehmoment auf der Basis der Istdrehzahl und einer Solldrehzahl im Sinne einer Verringerung von Schwingungen beeinflußt, **dadurch gekennzeichnet, daß** die Reglereinheit einen Beobachter umfaßt, welcher den durch eine Übersetzungsverstellung des Getriebes hervorgerufene Motordrehzahlgradienten und/oder den durch die Fahrervorgabe hervorgerufene Motordrehzahlgradienten ermittelt und daraus die Sollmotordrehzahl ableitet.

## Claims

1. Method for controlling the drive unit of a vehicle, the torque of the drive unit being influenced with the effect of reducing vibrations in the drive train in the vehicle, the influencing of the torque being derived from a comparison between the rotational speed of the drive unit and a predefined setpoint rotational speed, **characterized in that** the setpoint rotational speed is determined as a function of the engine rotational gradients brought about by the predefinition by the driver and/or by the adjustment of the transmission ratio of the gearbox.

2. Method according to Claim 1, **characterized in that** the gearbox is a gearbox with an infinitely variable adjustment characteristic, in particular a CVT gearbox.

3. Method according to one of the preceding claims, **characterized in that** the engine speed gradient which is brought about by the adjustment of the transmission ratio of the gearbox is determined on the basis of the transmission ratio of the gearbox and the speed of the vehicle.

4. Method according to one of the preceding claims, **characterized in that** the engine speed gradient which corresponds to the driver's request it determined from the driver's predefinition and the engine speed.

**5.** Method according to one of the preceding claims, **characterized in that** the determined gradients are logically linked and the linking of the logic operation is integrated to form the set point engine speed.

**6.** Device for controlling the drive unit of a vehicle, having a control unit which influences the torque of the drive unit with the effect of reducing vibrations in the drive train of the vehicle, said control unit having a regulator unit which influences the torque on the basis of the actual rotational speed and a setpoint rotational speed with the effect of reducing vibrations, **characterized in that** the regulator unit comprises an observer which determines the engine speed gradient brought about by adjusting the transmission ratio of the gearbox, and/or the engine speed gradient brought about by the driver's predefinition, and derives the setpoint engine speed therefrom.

**Revendications**

**1.** Procédé pour commander l'unité d'entraînement d'un véhicule, selon lequel le couple de rotation de l'unité d'entraînement est influencé au sens d'une réduction des vibrations dans la ligne de transmission dans le véhicule, l'influence du couple de rotation étant déduite d'une comparaison entre la vitesse de rotation de l'unité d'entraînement et une vitesse de rotation de consigne prédéterminée, **caractérisé en ce que** la vitesse de rotation de consigne est déterminée en fonction des gradients de vitesse de rotation du moteur liés à la demande du conducteur et/ou au réglage de démultiplication de la boîte de vitesses.

**2.** Procédé selon la revendication 1, **caractérisé en ce que** la boîte de vitesses est une boîte de vitesses dont la caractéristique de réglage est continue, en particulier une boîte de vitesses à variation continue.

**3.** Procédé selon l'une des revendications précédentes, **caractérisé en ce que** le gradient de vitesse de rotation du moteur lié au réglage de démultiplication de la boîte de vitesses est déterminé sur la base de la démultiplication de la boîte de vitesses et de la vitesse du véhicule.

**4.** Procédé selon l'une des revendications précédentes, **caractérisé en ce que** le gradient de vitesse de rotation correspondant au souhait du conducteur est établi à partir de la spécification par le conducteur et de la vitesse de rotation du moteur.

**5.** Procédé selon l'une des revendications précédentes, **caractérisé en ce que** les gradients établis sont combinés et le résultat de la combinaison est intégré à la vitesse de rotation de consigne du moteur.

**6.** Dispositif pour commander l'unité d'entraînement d'un véhicule, comportant une unité de commande qui influence un couple de rotation de l'unité d'entraînement au sens d'une réduction des vibrations dans la ligne de transmission du véhicule, qui comprend une unité de régulation qui agit sur le couple de rotation sur la base de la vitesse de rotation effective et d'une vitesse de rotation de consigne au sens d'une réduction des vibrations, **caractérisé en ce que** l'unité de régulation comprend un observateur qui établit le gradient de vitesse de rotation du moteur lié au réglage de démultiplication de la boîte de vitesses et/ou le gradient de vitesse de rotation du moteur lié à la demande du conducteur et en déduit la vitesse de rotation de consigne du moteur.

Fig.1

EP 1 194 686 B1

Fig. 2

EP 1 194 686 B1

Fig. 3